# EUROPEAN PATENT APPLICATION

(11) **EP 4 818 955 A1**
(43) Date of publication of application: **07.10.2026**
(21) Application number: 26168766.9
(22) Date of filing: 27.03.2026
(51) Int. Cl.: G06F 30/00, G06F 30/10

(54) **COLLABORATIVE COMPUTER-AIDED DESIGN WITH A TRACE SPACE**

(30) Priority: 31.03.2025 US 202519096480
(71) Applicant: Autodesk, Inc., San Francisco, CA 94105 (US)
(72) Inventor: NIKOLAYEV, Alexander Nikolaeyvich, San Francisco, CA, 94105 (US); WILLCOX, Damian Paul Stephen, San Francisco, CA, 94105 (US)
(74) Representative: Fish & Richardson P.C.

(57) **Abstract**

Methods, systems, and apparatus, including medium-encoded computer program products include: receiving, by a drawing application that has locked a drawing for editing by a first user, a request from a second user to check out one or more original objects of the drawing; locking the one or more original objects for editing by the second user; generating a trace space including a copy of the one or more original objects; applying one or more modifications by the second user to the copy of the one or more original objects in the trace space; receiving a request by the second user to check in the one or more modified objects back into the drawing; receiving an indication of approval from the first user to check in the one or more modified objects; replacing, in the drawing, the one or more original objects by the one or more modified objects.

## Description

### BACKGROUND

This specification relates to computer-aided design in a collaborative environment, such as generation of two-dimensional or three-dimensional models for objects in a collaborative environment. The models can be used in computer-aided manufacturing. The objects can be objects to be manufactured using additive manufacturing, subtractive manufacturing and/or other manufacturing systems and techniques, or can be other objects, which can be provided as a digital asset, such as for use in animation. The models can be for use in the architecture, engineering, and construction (AEC) fields.

### SUMMARY

This specification describes technologies relating to computer-aided design (CAD) in a collaborative environment, such as generation of two-dimensional or three-dimensional models for objects in a collaborative environment. The described technologies use a trace space to facilitate editing of a CAD drawing by several users when the drawing is locked for editing by a user in a CAD drawing application. The trace space can be a design space embedded in the drawing and that includes a copy of one or more original objects of the drawing and maintains references to the corresponding original objects. The drawing application can receive a request from a user to select one or more original objects to be copied to a trace space, and check-out the trace space for editing the copies of the objects. The user locking the drawing can continue working on the drawing but cannot edit the objects in the checked-out trace space. When the user finishes editing the copies of the objects in the trace space, the drawing application can receive a request by that user to check in the modified objects back into the drawing. The user locking the drawing can review the changes and accept or refuse the incorporation of the changes into the drawing.

In some examples, the models can be used in computer-aided manufacturing. The objects can be objects to be manufactured using additive manufacturing, subtractive manufacturing and/or other manufacturing systems and techniques. In some examples, the models can be for use in the architecture, engineering, and construction (AEC) fields.

In general, one or more aspects of the subject matter described in this specification can be embodied in one or more methods (and also one or more non-transitory computer-readable mediums tangibly encoding a computer program operable to cause one or more processors to perform operations), including: receiving, by a drawing application that has locked a drawing for editing by a first user, a request from a second user to check out one or more original objects of the drawing; locking the one or more original objects for editing by the second user; generating a trace space including a copy of the one or more original objects; applying one or more modifications by the second user to the copy of the one or more original objects in the trace space to generate one or more modified objects; receiving a request by the second user to check in the one or more modified objects having the one or more applied modifications back into the drawing; receiving an indication of approval from the first user to check in the one or more modified objects; and replacing, in the drawing, the one or more original objects by the one or more modified objects.

One or more aspects of the subject matter described in this specification can also be embodied in one or more systems including one or more processors; and a computer-readable medium storing instructions that cause the one or more processors to perform operations including: receiving, by a drawing application that has locked a drawing for editing by a first user, a request from a second user to check out one or more original objects of the drawing; locking the one or more original objects for editing by the second user; generating a trace space including a copy of the one or more original objects; applying one or more modifications by the second user to the copy of the one or more original objects in the trace space to generate one or more modified objects; receiving a request by the second user to check in the one or more modified objects having the one or more applied modifications back into the drawing; receiving an indication of approval from the first user to check in the one or more modified objects; and replacing, in the drawing, the one or more original objects by the one or more modified objects.

These and other aspects can each, optionally, include one or more of the following features. Replacing the one or more original objects by the one or more modified objects can include replacing the one or more original objects while the first user still has the drawing locked for editing. The method and the operations can include receiving a request from the first user to modify one of the one or more original objects while the second user has locked the one or more original objects; and in response, denying the request from the first user. The method and the operations can include: receiving a second request by the second user to check in a second modified object while the first user has the drawing locked; receiving an indication of disapproval from the first user; and in response, denying the second request. The method and the operations can include: presenting, to the first user, an overlay of the one or more modified objects over the drawing. The method and the operations can include: receiving, from the second user, a request to modify one or more other original objects that were not part of the check out request; and in response, denying the modification request. The method and the operations can include presenting, to the second user, a version of the drawing that incorporates the one or more modifications to the one or more original objects. The method and the operations can include presenting, to the first user, a visual representation of the one or more original objects checked out by the second user. The method and the operations can include: receiving a request from the second user to save the one or more modified objects; and in response, generating a new drawing including the one or more modified objects replacing the one or more original objects. Generating the new drawing can include generating a new drawing as of the time of the check out request or as of a current time. The trace space can be a drawing space that presents the checked-out objects for editing and maintains references to the corresponding original objects. The trace space can present the checked-out objects overlaid over the locked drawing. The method and the operations can include: generating, by the drawing application, a backup trace space with the drawing as of the time of the check-in request before replacing, in the drawing, the one or more original objects by the one or more modified objects.

Particular embodiments of the subject matter described in this specification can be implemented to realize one or more of the following advantages. The described methods can be employed in collaborative design workflows to enable one or more users to work on a design that has been locked for editing by another user without creating conflicts. This makes collaborative design more efficient and speeds up the design process.

The details of one or more embodiments of the subject matter described in this specification are set forth in the accompanying drawings and the description below. Other features, aspects, and advantages of the invention will become apparent from the description, the drawings, and the claims.

### BRIEF DESCRIPTION OF THE DRAWINGS

FIG. 1 shows an example of a system usable in a collaborative computer aided design process.
FIG. 2 is a flowchart of an example of a process for collaborative computer-aided design with a trace space.
FIGS. 3A-3I show examples of different stages of the collaborative computer-aided design process with a trace space.
FIG. 4 is a schematic diagram of a data processing system including a data processing apparatus, which can be programmed as a client or as a server, and implement the techniques described in this document.

Like reference numbers and designations in the various drawings indicate like elements.

### DETAILED DESCRIPTION

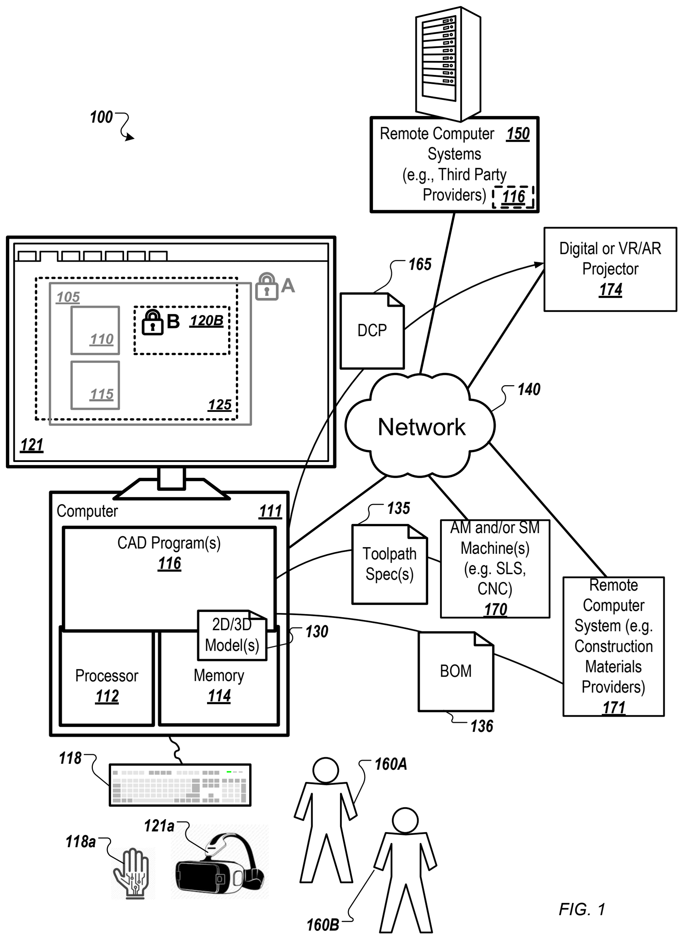

FIG. 1 shows an example of a system 100 usable to facilitate a collaborative computer aided design process.

A computer 111 includes a processor 112 and a memory 114, and the computer 111 can be connected to a network 140, which can be a private network, a public network, a virtual private network, etc. The processor 112 can be one or more hardware processors, which can each include multiple processor cores. The memory 114 can include both volatile and non-volatile memory, such as Random Access Memory (RAM) and Flash RAM. The computer 111 can include various types of computer storage media and devices, which can include the memory 114, to store instructions of programs that run on the processor 112, including Computer Aided Design (CAD) program(s) 116, which include collaborative capabilities, such as a collaborative computer-aided design process using a trace space as described. For example, a user can select one or more objects of a CAD design (also called CAD drawing or drawing hereinafter) they want to edit while another user is locking the drawing for editing. The selected objects can be "checked-out" of the drawing and copied to a trace space where the user can make changes to the objects. The user locking the drawing can continue working on the drawing but cannot edit the objects that have been checked-out. When the other user finishes editing the objects in the trace space, they can send them back to the user locking the drawing for review and incorporation.

As used herein, CAD refers to any suitable program used to design physical structures that meet design requirements, regardless of whether or not the program is capable of interfacing with and/or controlling manufacturing equipment. Thus, CAD program(s) 116 can include Computer Aided Engineering (CAE) program(s), Computer Aided Manufacturing (CAM) program(s), etc. The program(s) 116 can run locally on computer 111, remotely on a computer of one or more remote computer systems 150 (e.g., one or more third party providers' one or more server systems accessible by the computer 111 via the network 140) or both locally and remotely. Thus, a CAD program 116 can be two or more programs that operate cooperatively on two or more separate computer processors in that one or more programs 116 operating locally at computer 111 can offload processing operations (e.g., geometry generation and/or physical simulation operations) "to the cloud" by having one or more programs 116 on one or more computers 150 perform the offloaded processing operations.

The CAD program(s) 116 present a user interface (UI) 122 on a display device 121 of the computer 111, which can be operated using one or more input devices 118 of the computer 111 (e.g., keyboard and mouse). Note that while shown as separate devices in FIG. 1, the display device 121 and/or input devices 118 can also be integrated with each other and/or with the computer 111, such as in a tablet computer (e.g., a touch screen can be an input/output device 118, 121). Moreover, the computer 111 can include or be part of a virtual reality (VR) and/or augmented reality (AR) system. For example, the input/output devices 118, and 121 can include VR/AR input controllers, gloves, or other hand manipulating tools 118a, and/or a VR/AR headset 121a. In some instances, the input/output devices can include hand-tracking devices that are based on sensors that track movement and recreate interaction as if performed with a physical input device. In some implementations, VR and/or AR devices can be standalone devices that may not need to be connected to the computer 111. The VR and/or AR devices can be standalone devices that have processing capabilities and/or an integrated computer such as the computer 111, for example, with input/output hardware components such as controllers, sensors, detectors, etc.

In any case, users 160A, 160B can interact with the CAD program(s) 116 to generate, visualize, and/or manipulate two-dimensional or three-dimensional model(s), which can be stored in model document(s) 130. Users 160A, 160B can interact with the CAD program(s) 116 using a same computer 111 or different computers.

The CAD program(s) 116 can implement a collaborative computer aided design process that uses a trace space 125 to facilitate editing of a CAD drawing by several users when the drawing is locked for editing by a user. In the example shown in FIG. 1, several objects 110, 115, 120B are presented in a drawing space 105 that has been locked for editing by a user 160A. User 160B can select one or more objects 120B of the locked drawing and copy them to a trace space 125 of the CAD drawing to edit those objects 120B. The selected objects are "checked-out" of the locked drawing such that the user locking the drawing 160A can continue working on the drawing but cannot edit the objects 120B that have been checked-out by user 160B. When the user 160B finishes editing the objects 120B in the trace space 125, the CAD program(s) 116 can receive a request by user 160B to check in the modified objects back into the drawing. The user 160A locking the drawing can review the changes and accept or refuse the incorporation of the changes into the drawing.

In some examples, the CAD program(s) 116 can implement the described collaborative computer aided design process to facilitate design, such as to facilitate building design. In some examples, the CAD program(s) 116 can implement the described collaborative computer aided design process to obtain a model for an object for which a corresponding physical structure is to be manufactured. Once the user(s) 160A, 160B are satisfied with the model, the computer model can be stored as a model document 130 and/or used to generate another representation of the model (e.g., toolpath specifications for a manufacturing process for the object or portions thereof). This can be done upon request by any of the users 160A, 160B, or in light of the user's request for another action, such as sending the computer model to a manufacturing machine, e.g., additive manufacturing (AM) machine(s) and/or subtractive manufacturing (SM) machine(s) 170, or other manufacturing machinery, which can be directly connected to the computer 111, or connected via a network 140, as shown. This can involve a post-process carried out on the local computer 111 or externally, for example, based on invoking a cloud service running in the cloud, to further process the generated model (e.g., based on considerations associated with the additive manufacturing process) and to export the model to an electronic document from which to manufacture. Note that an electronic document (which for brevity will simply be referred to as a document) can be a file, but does not necessarily correspond to a file. A document may be stored in a portion of a file that holds other documents, in a single file dedicated to the document in question, or in multiple coordinated files. In addition, the user 160 can save or transmit the model for later use. For example, the CAD program(s) 116 can store the document 130 that includes the model.

In some example applications, the CAD program(s) 116 can provide a document 135 (e.g., having toolpath specifications of an appropriate format) to an AM and/or SM machine 170 to produce a physical structure corresponding to at least a portion of the model. An AM machine 170 can employ one or more additive manufacturing techniques, such as granular techniques (e.g., Powder Bed Fusion (PBF), Selective Laser Sintering (SLS) and Direct Metal Laser Sintering (DMLS)) or extrusion techniques (e.g., Fused Filament Fabrication (FFF), metals deposition). In some cases, the AM machine 170 builds the physical structure directly, and in some cases, the AM machine 170 builds a mold for use in casting or forging the physical structure.

A SM machine 170 can be a Computer Numerical Control (CNC) milling machine, such as a multi-axis, multi-tool milling machine used in the manufacturing process. For example, the CAD program(s) 116 can generate CNC instructions for a machine tool system 170 that includes multiple tools (e.g., solid carbide round tools of different sizes and shapes, and insert tools of different sizes that receive metal inserts to create different cutting surfaces) useable for various machining operations. Thus, in some implementations, the CAD program(s) 116 can provide a corresponding document 135 (having toolpath specifications of an appropriate format, e.g., a CNC numerical control (NC) program) to the SM machine 170 for use in manufacturing the physical structure using various cutting tools, etc.

In some examples, the model document 130 can also be used to generate a model for use in constructing the object. For example, a BIM (Building Information Management) model for use in constructing the object can be generated. The BIM model can be used to generate a bill of materials (BOM) 135 including elements that will be used for constructing the object. The BOM can be stored, exported to an electronic document, and/or sent to a remote computer system 170, such as one or more construction material providers. Note that an electronic document (which for brevity will simply be referred to as a document) can be a file, but does not necessarily correspond to a file.

In addition, in some implementations, no physical manufacturing is involved. The systems and techniques described herein are applicable to any suitable modelling software. In some implementations, the CAD program(s) 116 can be animation production program(s) that render the model to a document 165 of an appropriate format for visual display, such as by a digital or VR/AR projector 174 (e.g., a digital cinema package (DCP) 165 for movie distribution) or other high resolution display device. Other applications are also possible.

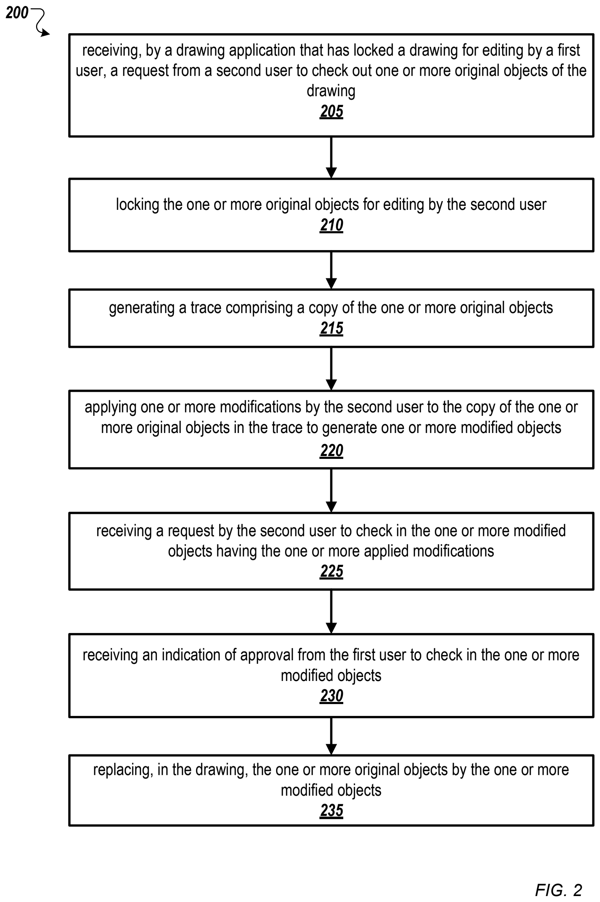

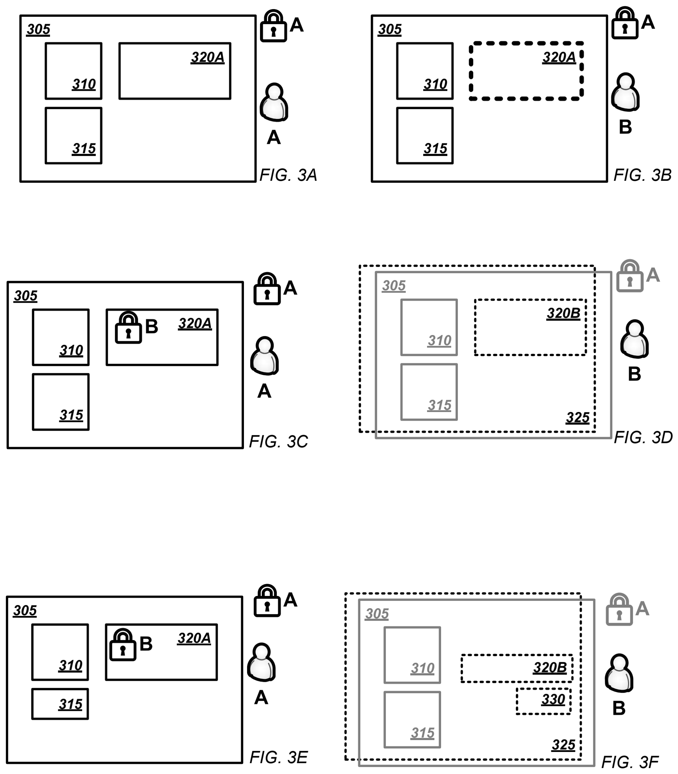

FIG. 2 is a flowchart of an example of a process for collaborative computer-aided design with a trace space. FIGS. 3A-3I show examples of different stages of a collaborative computer-aided design process such as process 200.

At 205, a drawing application that has locked a drawing for editing by a first user, receives a request from a second user to check out one or more original objects of the drawing. The drawing application can be CAD application, such as CAD program(s) 116. The drawing can be a CAD drawing. For example, FIG. 3A shows a drawing space 305 with a drawing that includes objects 310, 315, 320A. Since user A is editing the drawing, the drawing application has locked the drawing for editing by user A. The application receives a request from user B who wants to edit portions of the drawing. In this case, as shown in FIG. 3B, the request is in the form of a selection by user B of original object 320A of the drawing.

At 210, the drawing application can receive a request to lock one or more original objects for editing by the second user. The drawing application can lock the one or more original objects for editing by the second user in response to the request. As shown in FIG. 3C, the drawing space 205 where the user A is editing the drawing can show object 320A as locked for editing by user B. In some examples, if a request from the first user to modify one of the one or more original objects (object 320A in this example) is received while the second user has locked the one or more original objects, the request from the first user is denied.

At 215, the drawing application can generate a trace space including a copy of the one or more original objects. For example, FIG. 3D shows trace space 325 that includes a copy 320B of object 320A. In some examples, the trace space 325 can present an overly of the checked-out object in context with the other elements of the drawing. For instance, as shown in FIG. 3D, user B sees object 320B in trace space 325 and objects 310 and 315 in the background. In some examples, the trace space can show objects 310 and 315 in a different color, different shade, or as semi-transparent objects to more easily differentiate the objects in the trace space from the objects that are locked for editing in drawing space 305 by user A and that are shown in trace space 325 to provide context for user B. If a request to modify one or more other original objects that were not part of the check out request is received from the second user (either in the trace space or in the drawing space), the modification request is denied.

The trace space can be an embedded space that is part of the original drawing file and that works as a sandbox environment. In some examples, when the trace is checked-out, the checked-out trace can be stored separately, instead of being stored as an embedded space that is part of the original drawing file. For example, the checked-out trace can be stored as a file on a local network, or remotely (e.g., in the cloud).

Changes in the checked-out trace space are not propagated to the original drawing until they undergo a review process. The copies of the objects in the trace space (e.g., object 320B) can maintain references to the corresponding original objects (e.g., object 320A).

At 220, the second user can apply one or more modifications to the copy of the one or more original objects in the trace space to generate one or more modified objects. For example, as shown in FIG. 3F, the user B can change the dimensions of object 320B or make any other changes to object 320B. As shown in FIG. 3F, user B can also add new objects in the trace space, such as object 330. At the same time, as shown in FIG. 3E, user A can continue editing the original drawing in drawing space 305. When an object is locked, its status can be updated and visible to other users in real time. User A sees object 320A as locked and the changes made to object 320 in the trace space have not yet been propagated to the drawing space 305. Similarly, user B can see the locked drawing in the state when the objects were checked-out, without the changes that user A makes to the drawing being visualized in the overlay presentation.

If a request from the second user to save the one or more modified objects is received, a new drawing including the one or more modified objects replacing the one or more original objects can be generated. Generating the new drawing can include generating a new drawing as of the time of the check out request or as of a current time.

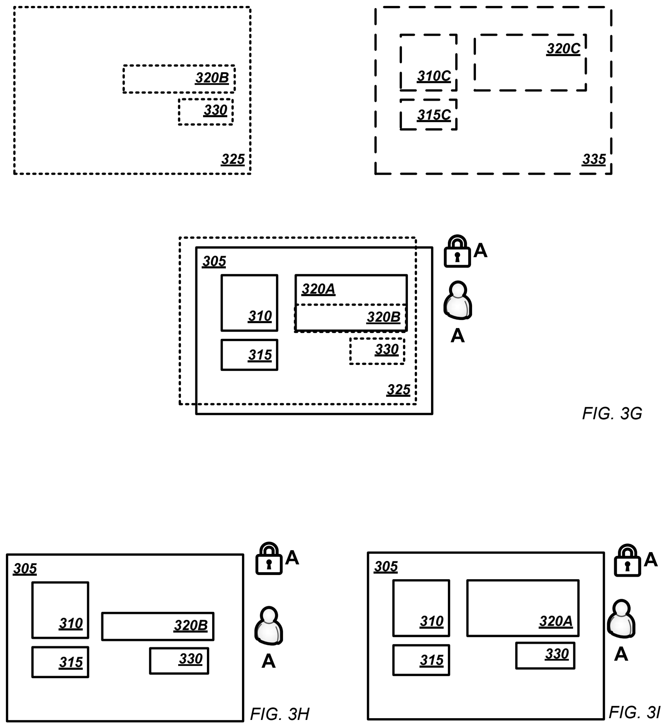

At 320, the drawing application receives a request by the second user to check in the one or more modified objects having the one or more applied modifications back into the drawing. For example, as shown in FIG. 3G, the second user wants to check in objects 320B and 330 from trace space 325. In some examples, before initiating the check in process, and in response to the second user request, the drawing application or the first user can generate a backup trace file 335 including copies 310C, 315C 320C of the objects of the drawing in the drawing space 305 at the time of the check in request.

To facilitate reviewing, by the first user, any changes made by the second user, the drawing application can present an overlay of the one or more modified objects over the drawing in the drawing space 305. For example, as shown in FIG. 3G, the trace space 325 including objects 320B, 330 can be imported and presented as an overlay in the drawing space 305 that includes objects 310, 315, 320A. As object 320A and object 320B can be presented simultaneously, changes made by user B can be easily reviewed.

After the first user reviews the changes made by the second user, at 230, the drawing application can receive an indication of approval from the first user to check in the one or more modified objects. As shown in FIG. 3H, this involves replacing, in the drawing in the drawing space 305, the one or more original objects 320A by the one or more modified objects 320B, 330. The one or more original objects can be replaced by the one or more modified objects while user A still has the drawing locked for editing. As shown in FIG. 3H, the first user can be presented with a version of the drawing that incorporates the one or more modifications to the one or more original objects. The second user can also be presented with a version of the drawing that incorporates the one or more modifications to the one or more original objects.

In some examples, upon reviewing changes made by user B, user A can disapprove some of the changes. In the example of FIG. 3I, user A has accepted the inclusion of object 330 but has not accepted the modifications made by user B in 320B to the copy of object 320A. Accordingly, object 320A is shown in the revised drawing rather than object 320B.

User B can continue making changes in the trace space after the check in and submit corresponding requests for additional check ins of modified objects. For example, a second request by the second user can be received to check in a second modified object while the first user has the drawing locked. In some examples, an indication of disapproval from the first user can be received and, in response, the second request can be denied.

The process of FIG. 2 can provide, e.g., by CAD program(s) 116, the drawing as a model of an object for use in manufacturing the object. The providing can involve sending or saving the model to a permanent storage device for use in manufacturing the object using manufacturing systems. In some implementations, the providing can involve generating, e.g., by CAD program(s) 116, toolpath specifications for computer-controlled manufacturing system(s) using the computer model, and manufacturing, e.g., by CAD program(s) 116, at least a portion of the object with computer-controlled manufacturing system(s) using the toolpath specifications. In some implementations, the providing can include manufacturing the object with a manufacturing machine using the toolpath specification generated, where the computer model can be a model of a physical structure for the object that will be manufactured using an additive/subtractive manufacturing process.

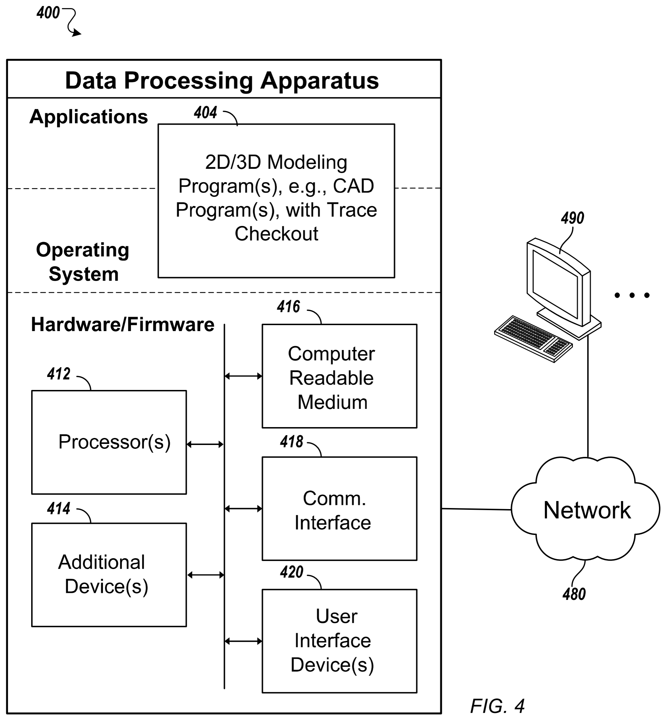

FIG. 4 is a schematic diagram of a data processing system including a data processing apparatus 400, which can be programmed as a client or as a server. The data processing apparatus 400 is connected with one or more computers 490 through a network 480. While only one computer is shown in FIG. 4 as the data processing apparatus 400, multiple computers can be used. The data processing apparatus 400 includes various software modules, which can be distributed between an applications layer and an operating system. Thus, the 2D/3D modeling program(s) 404 can be CAD program(s) 404 (such as CAD program(s) 116) and can implement collaborative computer aided design process, such as collaborative computer aided design processes that use trace checkout as described. Further, the program(s) 404 can potentially implement manufacturing control operations (e.g., generating and/or applying toolpath specifications to effect manufacturing of designed objects). The number of software modules used can vary from one implementation to another. Moreover, the software modules can be distributed on one or more data processing apparatus connected by one or more computer networks or other suitable communication networks.

The data processing apparatus 400 also includes hardware or firmware devices including one or more processors 412, one or more additional devices 414, a computer readable medium 416, a communication interface 418, and one or more user interface devices 420. Each processor 412 is capable of processing instructions for execution within the data processing apparatus 400. In some implementations, the processor 412 is a single or multi-threaded processor. Each processor 412 is capable of processing instructions stored on the computer readable medium 416 or on a storage device such as one of the additional devices 414. The data processing apparatus 400 uses the communication interface 420 to communicate with one or more computers 490, for example, over the network 480. Examples of user interface devices 420 include a display, a camera, a speaker, a microphone, a tactile feedback device, a keyboard, a mouse, and VR and/or AR equipment. The data processing apparatus 400 can store instructions that implement operations associated with the program(s) described above, for example, on the computer readable medium 416 or one or more additional devices 414, for example, one or more of a hard disk device, an optical disk device, a tape device, and a solid state memory device.

Embodiments of the subject matter and the functional operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented using one or more modules of computer program instructions encoded on a non-transitory computer-readable medium for execution by, or to control the operation of, data processing apparatus. The computer-readable medium can be a manufactured product, such as hard drive in a computer system or an optical disc sold through retail channels, or an embedded system. The computer-readable medium can be acquired separately and later encoded with the one or more modules of computer program instructions, e.g., after delivery of the one or more modules of computer program instructions over a wired or wireless network. The computer-readable medium can be a machine-readable storage device, a machine-readable storage substrate, a memory device, or a combination of one or more of them.

The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, a runtime environment, or a combination of one or more of them. In addition, the apparatus can employ various different computing model infrastructures, such as web services, distributed computing and grid computing infrastructures.

A computer program (also known as a program, software, software application, script, or code) can be written in any suitable form of programming language, including compiled or interpreted languages, declarative or procedural languages, and it can be deployed in any suitable form, including as a stand-alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of non-volatile memory, media and memory devices, including by way of example semiconductor memory devices, e.g., EPROM (Erasable Programmable Read-Only Memory), EEPROM (Electrically Erasable Programmable Read-Only Memory), and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., an LCD (liquid crystal display) display device, an OLED (organic light emitting diode) display device, or another monitor, for displaying information to the user, and a keyboard and a pointing device, e.g., a mouse or a trackball, by which the user can provide input to the computer. Other kinds of devices can be used to provide for interaction with a user as well; for example, feedback provided to the user can be any suitable form of sensory feedback, e.g., visual feedback, auditory feedback, or tactile feedback; and input from the user can be received in any suitable form, including acoustic, speech, or tactile input.

The computing system can include clients and servers. A client and server are generally remote from each other and typically interact through a communication network. The relationship of client and server arises by virtue of computer programs running on the respective computers and having a client-server relationship to each other. Embodiments of the subject matter described in this specification can be implemented in a computing system that includes a back-end component, e.g., as a data server, or that includes a middleware component, e.g., an application server, or that includes a front-end component, e.g., a client computer having a graphical user interface or a browser user interface through which a user can interact with an implementation of the subject matter described is this specification, or any combination of one or more such back-end, middleware, or front-end components. The components of the system can be interconnected by any suitable form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

While this specification contains many implementation details, these should not be construed as limitations on the scope of what is being or may be claimed, but rather as descriptions of features specific to particular embodiments of the disclosed subject matter. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the invention have been described. Other embodiments are within the scope of the following claims. In addition, actions recited in the claims can be performed in a different order and still achieve desirable results.

### EMBODIMENTS

Although the present invention is defined in the claims, it should be understood that the present invention can also (alternatively) be defined in accordance with the following embodiments:
1. A method comprising:
   receiving, by a drawing application that has locked a drawing for editing by a first user, a request from a second user to check out one or more original objects of the drawing;
   locking the one or more original objects for editing by the second user;
   generating a trace space comprising a copy of the one or more original objects;
   applying one or more modifications by the second user to the copy of the one or more original objects in the trace space to generate one or more modified objects;
   receiving a request by the second user to check in the one or more modified objects having the one or more applied modifications back into the drawing;
   receiving an indication of approval from the first user to check in the one or more modified objects; and
   replacing, in the drawing, the one or more original objects by the one or more modified objects.
2. The method of embodiment 1, wherein replacing the one or more original objects by the one or more modified objects comprises replacing the one or more original objects while the first user still has the drawing locked for editing.
3. The method of embodiment 1, further comprising:
   receiving a request from the first user to modify one of the one or more original objects while the second user has locked the one or more original objects; and
   in response, denying the request from the first user.
4. The method of embodiment 1, further comprising:
   receiving a second request by the second user to check in a second modified object while the first user has the drawing locked;
   receiving an indication of disapproval from the first user; and
   in response, denying the second request.
5. The method of embodiment 1, further comprising:
   presenting, to the first user, an overlay of the one or more modified objects over the drawing.
6. The method of embodiment 1, further comprising:
   receiving, from the second user, a request to modify one or more other original objects that were not part of the check out request; and
   in response, denying the modification request.
7. The method of embodiment 1, further comprising presenting, to the second user, a version of the drawing that incorporates the one or more modifications to the one or more original objects.
8. The method of embodiment 1, further comprising presenting, to the first user, a visual representation of the one or more original objects checked out by the second user.
9. The method of embodiment 1, further comprising:
   receiving a request from the second user to save the one or more modified objects; and
   in response, generating a new drawing comprising the one or more modified objects replacing the one or more original objects.
10. The method of embodiment 9, wherein generating the new drawing comprises generating a new drawing as of the time of the check out request or as of a current time.
11. The method of embodiment 1, wherein the trace space is a drawing space that presents the checked-out objects for editing and maintains references to the corresponding original objects.
12. The method of embodiment 11, wherein the trace space presents the checked-out objects overlaid over the locked drawing.
13. The method of embodiment 1, further comprising:
   generating, by the drawing application, a backup trace space with the drawing as of the time of the check-in request before replacing, in the drawing, the one or more original objects by the one or more modified objects.
14. A system comprising:
   one or more processors; and
   a computer-readable medium storing instructions that cause the one or more processors to perform operations comprising:
      receiving, by a drawing application that has locked a drawing for editing by a first user, a request from a second user to check out one or more original objects of the drawing;
      locking the one or more original objects for editing by the second user;
      generating a trace space comprising a copy of the one or more original objects;
      applying one or more modifications by the second user to the copy of the one or more original objects in the trace space to generate one or more modified objects;
      receiving a request by the second user to check in the one or more modified objects having the one or more applied modifications back into the drawing;
      receiving an indication of approval from the first user to check in the one or more modified objects; and
      replacing, in the drawing, the one or more original objects by the one or more modified objects.
15. The system of embodiment 14, wherein replacing the one or more original objects by the one or more modified objects comprises replacing the one or more original objects while the first user still has the drawing locked for editing.
16. The system of embodiment 14, wherein the operations further comprise:
   receiving a request from the first user to modify one of the one or more original objects while the second user has locked the one or more original objects; and
   in response, denying the request from the first user.
17. The system of embodiment 14, wherein the operations further comprise:
   receiving a second request by the second user to check in a second modified object while the first user has the drawing locked;
   receiving an indication of disapproval from the first user; and
   in response, denying the second request.
18. A non-transitory computer-readable medium tangibly encoding instructions that, when executed, cause one or more processors to perform method operations comprising:
   receiving, by a drawing application that has locked a drawing for editing by a first user, a request from a second user to check out one or more original objects of the drawing;
   locking the one or more original objects for editing by the second user;
   generating a trace space comprising a copy of the one or more original objects;
   applying one or more modifications by the second user to the copy of the one or more original objects in the trace space to generate one or more modified objects;
   receiving a request by the second user to check in the one or more modified objects having the one or more applied modifications back into the drawing;
   receiving an indication of approval from the first user to check in the one or more modified objects; and
   replacing, in the drawing, the one or more original objects by the one or more modified objects.
19. The non-transitory computer-readable medium of embodiment 18, wherein replacing the one or more original objects by the one or more modified objects comprises replacing the one or more original objects while the first user still has the drawing locked for editing.
20. The non-transitory computer-readable medium of embodiment 18, wherein the method operations further comprise:
   receiving a request from the first user to modify one of the one or more original objects while the second user has locked the one or more original objects; and
   in response, denying the request from the first user.

## Claims

1. A method comprising:
receiving, by a drawing application that has locked a drawing for editing by a first user, a request from a second user to check out one or more original objects of the drawing;
locking the one or more original objects for editing by the second user;
generating a trace space comprising a copy of the one or more original objects;
applying one or more modifications by the second user to the copy of the one or more original objects in the trace space to generate one or more modified objects;
receiving a request by the second user to check in the one or more modified objects having the one or more applied modifications back into the drawing;
receiving an indication of approval from the first user to check in the one or more modified objects; and
replacing, in the drawing, the one or more original objects by the one or more modified objects.

2. The method of claim 1, wherein replacing the one or more original objects by the one or more modified objects comprises replacing the one or more original objects while the first user still has the drawing locked for editing.

3. The method of any preceding claim, further comprising:
receiving a request from the first user to modify one of the one or more original objects while the second user has locked the one or more original objects; and
in response, denying the request from the first user.

4. The method of any preceding claim, further comprising:
receiving a second request by the second user to check in a second modified object while the first user has the drawing locked;
receiving an indication of disapproval from the first user; and
in response, denying the second request.

5. The method of any preceding claim, further comprising:
presenting, to the first user, an overlay of the one or more modified objects over the drawing.

6. The method of any preceding claim, further comprising:
receiving, from the second user, a request to modify one or more other original objects that were not part of the check out request; and
in response, denying the modification request.

7. The method of any preceding claim, further comprising presenting, to the second user, a version of the drawing that incorporates the one or more modifications to the one or more original objects.

8. The method of any preceding claim, further comprising presenting, to the first user, a visual representation of the one or more original objects checked out by the second user.

9. The method of any preceding claim, further comprising:
receiving a request from the second user to save the one or more modified objects; and
in response, generating a new drawing comprising the one or more modified objects replacing the one or more original objects.

10. The method of claim 9, wherein generating the new drawing comprises generating a new drawing as of the time of the check out request or as of a current time.

11. The method of any preceding claim, wherein the trace space is a drawing space that presents the checked-out objects for editing and maintains references to the corresponding original objects.

12. The method of claim 11, wherein the trace space presents the checked-out objects overlaid over the locked drawing.

13. The method of any preceding claim, further comprising:
generating, by the drawing application, a backup trace space with the drawing as of the time of the check-in request before replacing, in the drawing, the one or more original objects by the one or more modified objects.

14. A system comprising:
one or more processors; and
a computer-readable medium storing instructions that cause the one or more processors to perform operations comprising the method of any one of claims 1 to 13.

15. A non-transitory computer-readable medium tangibly encoding instructions that, when executed, cause one or more processors to perform method operations comprising the method of any one of claims 1 to 13.
